Europäisches Patentamt

European Patent Office

Office européen des brevets

(11) Numéro de publication: **0 230 830 B1**

# FASCICULE DE BREVET EUROPEEN

(45) Date de publication de fascicule du brevet:
**10.04.91**

(51) Int. Cl.⁵: **A21D 13/08, A21D 2/18**

(21) Numéro de dépôt: **86402887.3**

(22) Date de dépôt: **22.12.86**

(54) **Produit alimentaire du type gâteau ou biscuit à propriétés de textures stables dans le temps et son procédé de fabrication.**

(30) Priorité: 26.12.85 FR 8519249

(43) Date de publication de la demande:
05.08.87 Bulletin 87/32

(45) Mention de la délivrance du brevet:
10.04.91 Bulletin 91/15

(84) Etats contractants désignés:
BE DE IT NL

(56) Documents cités:
EP-A- 0 055 432       EP-A- 0 172 074
GB-A- 1 124 150       GB-A- 2 102 269
US-A- 2 157 485       US-A- 3 057 736
US-A- 4 350 711

(73) Titulaire: **BELIN S.A.**
**Avenue Ambroise Croizat**
**F-91130 Ris-Orangis(FR)**

(72) Inventeur: **Dallemagne, Roger**
**99, rue de sèvres**
**F-75006 Paris(FR)**
Inventeur: **Imbault, Jean**
**6, avenue de la Libération**
**Nogentel F-92400 Chateau-Thierry(FR)**

(74) Mandataire: **Orès, Bernard et al**
**Cabinet ORES 6, Avenue de Messine**
**F-75008 Paris(FR)**

EP 0 230 830 B1

## Description

L'invention a pour objet un produit alimentaire du type biscuit ou gâteau, à propriétés de texture stables dans le temps et un procédé de fabrication d'un tel produit.

Elle vise, en particulier, des produits comme des petits gâteaux, ou biscuits, ou produits de pâtissierie industrielle à base de sucre, de farine, d'eau et de graisses qui comprennent, le cas échéant, des agents de texture et de sapidité et qui conservent pendant une durée relativement longue après leur fabrication leurs caractéristiques de structure.

On connaît, depuis longtemps, des gâteaux ou biscuits à structure composite c'est-à-dire constitués par une enveloppe et un fourrage formant deux phases de nature, structure et/ou de goûts différents.

Pour de tels produits, en particulier pour ceux comportant une enveloppe ou peau externe relativement croustillante et un partie interne ou mie relativement molle, se pose le problème d'une formulation et/ou d'un processus de fabrication qui assurent la conservation de cette structure dichotomique au cours d'une longue durée de stockage, d'au moins six à neuf mois à compter de la date de fabrication.

On connaît également, par exemple par US-A-4 455 333, un petit gâteau ou biscuit dont la mie comporte des régions discrètes contenant du sucre cristallisé et des régions discrètes contenant du sucre résistant à la cristallisation c'est-à-dire du sucre qui, pour la teneur en eau et l'activité d'eau du gâteau, cristallise sensiblement plus lentement que le sucrose dans les mêmes conditions, les régions contenant le sucre cristallisé donnant une texture croustillante, tandis que les régions contenant le sucre résistant à la cristallisation procurent une texture pouvant être mastiquée ou mâchée.

Pour un tel gâteau ou biscuit, et nonobstant l'existence de régions discrètes de textures différentes, le produit est homogène à l'échelle macroscopique, et cela pour se rapprocher, autant que faire se peut, de l'aspect, de la saveur et de la texture des biscuits ou petits gâteaux frais préparés par la ménagère à l'aide des ingrédients rappelés ci-dessus et qui sont généralement consommés très peu de temps après fabrication pour que soit appréciée la double texture à la fois croustillante et facile à mâcher caractéristique de leur fraicheur.

La fabrication des biscuits ou petits gâteaux selon le Brevet des Etats-Unis mentionné fait appel à des farines relativement nobles et, partant, coûteuses comme des farines de blé ou de seigle. En outre, et quel que soit le mode opératoire mis en oeuvre, l'on obtient un produit homogène, du moins à l'échelle macroscopique. Le produit obtenu conserve ses propriétés au cours du stockage mais il est relativement coûteux à fabriquer d'une part et, d'autre part, les formules mise en oeuvre ne se prêtent pas à la fabrication d'une grand variété de produits que recherchent les consommateurs.

C'est, d'une façon générale, un but de l'invention de fournir un produit alimentaire du type gâteau ou biscuit et un procédé de fabrication d'un tel produit qui pallient les inconvénients mentionnés ci-dessus des produits et procédés connus.

C'est, à cet égard, un but de l'invention de fournir un produit alimentaire qui conserve ses caractéristiques de texture, même après un stockage prolongé.

C'est, aussi, un but de l'invention de fournir un tel produit qui, même à la suite d'une longue durée de conservation, ne présente pas de traces de détériorations microbiologiques.

C'est, encore, un but de l'invention de fournir un procédé de fabrication industrielle de tels produits alimentaires permettant indifféremment l'obtention de produits à dichotomie de structure, par exemple des produits à textures hétérogènes comportant une enveloppe ou peau externe croustillante et un fourrage de nature, d'aspect et/ou de goût différents de celui de l'enveloppe ou, au contraire, des produits présentant une enveloppe externe croustillante et une partie interne quelque peu analogue à de la mie, plus facile à mâcher ou mastiquer que l'enveloppe extérieure mais sans discontinuité brutale de nature et/ou de goût entre l'enveloppe et la mie, de sorte que ces produits présentent des caractéristiques organoleptiques analogues à celles de produits fraîchement cuits constitués d'une seule et même pâte de base.

Un produit alimentaire selon l'invention, du type petit gâteau ou biscuit destiné à être conservé pendant une durée relativement longue après sa fabrication sans perdre ses qualités organoleptiques au cours de cette conservation, réalisé à partir d'au moins deux phases initialement distinctes dont la première, prévue pour former l'enveloppe extérieure du produit, est une composition céréalière riche en sucre cristallisant spontanément dans les conditions d'humidité et d'activité d'eau à l'équilibre du produit fini et dont la seconde est une composition contenant des ingrédients sucrants résistant à la cristallisation dans les conditions d'humidité et d'activité d'eau qui sont celles du produit fini, caractérisé en ce que ladite seconde composition contient en combinaison un élément non céréalier constitué par des fruits sous forme de noix choisis dans le groupe qui comprend les noix de coco, les noisettes et/ou des légumes sous forme de légumineuses, pris dans le groupe qui comprend les haricots, les fèves, les pois, ledit aliment non céréalier étant sous forme de poudre et ou de pâte et/ou de purée et constitue la source d'amidon et un élément de

2

régulation de la viscosité et/ou de l'humidité, constitué par des fruits sous forme de poudre et/ou de pâte et/ou de purée et/ou de pulpe.

Dans des réalisations où la seconde composition contient comme élément non céréalier des légumes et comme élément de régulation de la viscosité et/ou de l'humidité, de la poudre, pâte, purée ou pulpe de fruits, l'invention prévoit que lesdits légumes sont sous forme de poudre, pâte ou purée de légumineuse, notamment de haricot, et que l'élément de régulation de la viscosité et/ou d'humidité est choisi dans le groupe qui comprend notamment les poudres de pommes et/ou de de citron et/ou d'orange.

La première composition, riche en sucre cristallisant spontanément dans les conditons d'humidité et d'activité d'eau à l'équilibre du produit fini, et qui est destinée à former après cuisson du produit alimentaire l'enveloppe ou peau extérieure croustillante dudit produit contient au moins 75 % de saccharose et/ou de lactose de niveau du mélange des sucres.

Le caractère croustillant de la zone externe du produit, qui contraste avec le fondant de la zone intérieure, apparaît généralement une ou deux semaines après la date de fabrication et se conserve, dans un emballage hermétique approprié, pendant au moins six à neuf mois à compter de cette date de fabrication.

Selon encore une autre caractéristique de l'invention, on prévoit que ladite seconde composition contienne du bicarbonate d'ammonium lequel, en agissant en tant que poudre levante, provoque à la cuisson en combinaison avec l'amidon provenant de la source non céréalière présent au sein de ladite seconde composition l'apparition d'alvéoles internes dans la texture de ladite composition, - analogues aux alvéoles d'un biscuit usuel -, et qui, d'une part, abaissent la densité et, d'autre part, favorisent la simulation d'une homogénéité apparente, macroscopique, entre la zone interne et l'enveloppe externe du produit alimentaire terminé.

Selon une autre caractéristique de l'invention, le produit alimentaire selon l'invention, présente une humidité comprise entre 11 et 12 % (rapport eau/produit fini en poids) et une activité d'eau de 0,63 à 0,67.

Le procédé de fabrication d'un produit alimentaire du type petit gâteau ou biscuit destiné à être conservé pendant une durée relativement longue après sa fabrication sans perdre ses qualités organoleptiques au cours de cette conservation et qui est réalisé à partir d'au moins deux phases initialement distinctes, lesdites deux phases étant co-extrudées au travers d'une filière d'une machine d'extrusion pour l'obtention d'un boudin continu, caractérisé en ce que ledit boudin, qui comprend une gaîne externe formée par une première composition céréalière riche en sucres cristallisant spontanément dans les conditions d'humidité et d'activité d'eau à l'équilibre du produit fini et un fourrage central formé par une seconde composition contenant des ingrédients sucrants résistants à la cristallisation dans les conditions d'humidité et d'activité d'eau qui sont celles du produit fini, est divisé en pâtons individuels, et en ce que lesdits pâtons sont ensuite soumis à une opération de cuisson, principalement par leur face supérieure, conduite entre 150 et 250° C, pendant une durée de 7 à 8 minutes et, le cas échéant après que lesdits pâtons aient été garnis sur leur face supérieure d'un apprêt ou enduit de dorure.

Pour la préparation de la pâte destinée à former l'enveloppe extérieure du produit on réalise d'abord dans un pétrin usuel un mélange de matières grasses hydrogénées et de produits sucrants (sucre, plus dextose, prémélangés à sec) dans lequel sont ensuite introduits les produits liquides, oeufs, eau, mélasses, sirop à forte teneur en fructose et glucose, l'ensemble étant fouetté à vitesse rapide pour l'obtention d'un mélange à consistance crémeuse. A ce dernier sont alors ajoutées la farine et les poudres levantes acide et basique préalablement tamisées, l'ensemble étant pétri à vitesse lente. A la fin de ce pétrissage, on incorpore à la pâte ainsi obtenue une quantité de matières sucrantes (sucre plus dextrose) égale à celle initialememnt introduite et on pétrit à nouveau à vitesse lente. A la fin de l'opération de pétrissage on ajoute rapidement les éléments fragiles éventuellement prévus pour figurer dans le biscuit, - comme des fragments de noisettes, de chocolat, d'écorces d'orange, de raisins, etc... -, et, en fonction de la consistance de la pâte, celle-ci est directement utilisée pour la fabrication des produits selon l'invention ou, au contraire, laissée repower pour son utilisation ultérieure avec la composition constitutive de la deuxième phase dans une machine d'extrusion à filière de co-extrusion.

Pour la préparation de ladite seconde composition, on procède au mélange des ingrédients en introduisant successivement, dans un pétrin usuel à vitesses lente et rapide, les constituants liquides ou crémeux, les éléments pulvérulents et, enfin, le cas échéant, les produits solides.

Lorsque la source d'amidon est à base de légumes, par exemple de fèves de haricots, lesdites fèves subissent d'abord une pré-cuisson dans l'eau bouillante puis sont broyées sur des cylindres de granit en présence de sucre cristallisé pour former une pâte ; après ramollissement de ladite pâte, celle-ci est introduite dans le pétrin avec, le cas échéant, les matières grasses, du sirop à haute teneur en fructose, les constituants sous forme de purée, les autres composants éventuels sous forme liquide ou semi-liquide. Après addition du bicarbonate d'ammonium et des éléments pulvérulents comme la poudre de pomme, etc..., on ajoute les ingrédients solides en morceaux, comme des fragments d'écorce d'orange, des petits raisins, des fragments de noisettes caramélisées, des fragments de chocolat, etc... et le mélange est rendu homogène.

L'invention sera bien comprise par la description qui suit d'exemples de réalisation faite à titre non limitatif.

EXEMPLE I

On fabrique un petit gâteau ou biscuit en préparant d'abord une pâte destinée à former l'enveloppe ou peau extérieure du produit, à partir des ingrédients suivants, en parties en poids :

|  |  |  | Coeff. MS* |
|---|---|---|---|
| Farine de froment | : | 100,00 | 0,85 |
| Sucre | : | 70,00 | 1 |
| Huile arachide hydrogenee | : | 60,00 | 1 |
| Dextrose | : | 3,76 | 0,95 |
| Melasses betterave | : | 6,00 | 0,75 |
| Sel fin | : | 1,50 | 1 |
| Bicarbonate soude | : | 1,20 | 0,5 |
| Phosphate monocalcique | : | 1,25 | 1 |
| Hypervanille extrant de vanille naturelle concentree 5 fois | : | 0,003 | 1 |
| Oeufs entiers congeles | : | 9,6 | 0,25 |
| Eau | : | 13,35 | 0 |
| Total | : | 266,65 | |

*Coefficient de matieres seches

Pour la préparation de cette pâte, on mélange d'abord dans un pétrin usuel l'huile d'arachide et la moitié de la quantité totale de sucre et de dextrose prémélangés à sec.

Après l'obtention d'un produit de consistance crémeuse on ajoute les oeufs, l'eau, les mélasses de betterave, et on fouette en vitesse rapide. On ajoute ensuite la farine de froment, le sel, le bicarbonate de soude et le phosphate monocalcique ainsi que le concentré de vanille, le pétrissage ayant lieu en vitesse lente. A la fin de ce pétrissage, on introduit dans le pétrin le reste du prémélange sec de sucre et de dextrose, et on procède à un pétrissage à vitesse lente.

Pour la préparation du fourrage, on procède d'abord à une précuisson des fèves de haricots dans de l'eau bouillante, puis à un broyage sur cylindres de granit desdites fèves en présence de sucre cristallisé.

La pâte ainsi obtenue est alors introduite dans un pétrin avec un jus sucré de fruits exotiques, de l'eau, un sirop à haute teneur en fructose vendu par la Société ROQUETTE sous la dénomination MELIOSE 700, le mélange étant complété par de la poudre de pomme et du bicarbonate d'ammonium pour une composition totale suivante, en parties en poids.

|  |  |  | Coeff. MS |
|---|---|---|---|
| – Jus sucré de fruits exotiques (Wild) | : | 62,53 | 0,55 |
| – Méliose 700** | : | 54,21 | 0,70 |
| – Poudre de pomme | : | 34,57 | 0,95 |
| – Pâte de haricot | : | 25,02 | 0,82 |
| – Bicarbonate d'ammonium | : | 0,49 | 0 |
| – Eau | : | 0,94 | 0 |
|  |  | 177,76 |  |

** Mélange de 41 % de fructose, 53 % de glucose, 6 % de polysaccharides.

Il est prévu que le fourrage contienne de la poudre de pomme laquelle favorise l'obtention d'une viscosité satisfaisants pour la fabrication industrielle, à l'aide de machines automatiques, des produits recherchés.

La pâte céréalière et le fourrage sont alors réunis par co-extrusion au travers d'une filière annulaire. A la sortie de cette dernière, la masse co-extrudée est sous forme d'un boudin cylindrique continue d'un diamètre d'environ 20 mm comportant une gaine externe en la composition céréalière qui enferme le fourrage.

Ce boudin continu est alors découpé en pâtons individuels qui se présentent sous forme d'une petite quantité de fourrage entourée d'une manière ininterrompue par une enveloppe ou peau de pâte extérieure.

Les pâtons, légèrement aplatis, sont recouverts d'une dorure à l'oeuf et déposés sur la bande pleine d'un four de cuisson agissant principalement par la voûte procurant ainsi une cuisson préférentielle des produits sur leur face supérieure. La cuisson a lieu entre 150 et 250° C pendant une durée de l'ordre de 7 à 8 minutes, avantageusement 7 minutes 30 secondes.

A la sortie du four les petits biscuits ou gâteaux individuels dont le poids est de l'ordre de 11 à 12 g et dont le diamètre est de l'ordre de 50 à 55 mm, sont décollés de la bande, refroidis et emballés comme des biscuits ordinaires dans des moyens de conditionnement formant une barrière étanche à l'encontre de l'air ambiant, par exemple en un complexe lamifié papier/polyéthylène/aluminum/polyéthylène.

Nonobstant leur teneur en eau relativement élevée, de l'ordre de 12,5 %, les produits peuvent être traités mécaniquement par les machines usuelles de conditionnement de l'industrie de la biscuiterie, et cela en raison de leur bonne tenue conférée par l'envelope extérieure déshydratée à la cuisson.

Si l'on examine un petit gâteau ou biscuit selon l'invention quelques heures après sa fabrication, on constate que l'ensemble du produit est d'une consistance relativement molle, vraisemblablement en raison de la migration de l'humidité de l'intérieur vers l'extérieur du produit.

Si l'on renouvelle l'examen après deux à trois semaines de conservation, on constate alors que le produit présente une enveloppe ou peau externe relativement croustillante et une partie intérieure moelleuse. Chaque partie du biscuit ou gâteau présente alors la même activité d'eau, de l'ordre de 0,63 à 0,67, une humidité de l'ordre de 11 à 12 % et une enveloppe ou peau externe dans laquelle le saccharose est cristallisé.

Un examen du produit, après six mois de conservation dans l'emballage tel que défini ci-dessus, permet de constater que la texture est la même que celle après deux à trois semaines de stockage, c'est-à-dire une enveloppe ou peau externe relativement croustillante et une partie interne moelleuse ou fondante.

Ce résultat est à attribuer au fait que les sucres cristallisables (disaccharides du type saccharose ou lactose) représentent moins de 85 % du mélange de sucres du fourrage, les autres ingrédients sucrants étant constitués de sucres résistant à la cristallisation et qui sont, par exemple, des mono ou des disaccharides ou des mélanges de ces produits, comme du fructose, du dextrose, du maltose, etc...

En outre le produit présente une parfaite stabilité microbiologique.


EXEMPLE II

On prépare une composition céréalière identique à celle de l'Exemple I et un fourrage obtenu à partir des ingrédients suivants, en parties en poids :

|  |  | | Coeff. MS |
|---|---|---|---|
| - Jus sucré de fruits des bois (wild) | : | 56,27 | 0,61 |
| - Méliose 700 | : | 48,78 | 0,70 |
| - Poudre de pomme | : | 48,78 | 0,95 |
| - Pâte de pomme | : | 22,51 | 0,82 |
| - Bicarbonate ammonium | : | 0,59 | 0 |
| - Eau | : | 0,83 | 0 |
|  |  | 177,76 | |

Le fourrage comprend de la pulpe ou purée de fruit, comme de la pulpe de pomme, d'orange, de citron, etc ..., laquelle constitue un apport d'humidité sous une forme liée à la fibre cellulosique de la pulpe et ainsi difficilement disponible.

On obtient, après co-extrusion de la pâte céréalière et du fourrage, puis cuisson des produits découpés, des petits gâteaux ou biscuits fourrés aux fruits des bois.

EXEMPLE III

On prépare une pâte céréalière de façon analogue à celle décrite dans l'Exemple I avec les ingrédients suivants, en parties en poids.

|  |  | | Coeff. MS |
|---|---|---|---|
| - Farine de froment T 55 | : | 100,00 | 0,85 |
| - Sucre | : | 75,00 | 1 |
| - Huile arachide Hydro-génée | : | 44,00 | 1 |
| - Dextrose | : | 3,80 | 0,95 |
| - Sel fin | : | 1,50 | 1 |
| - Bicarbonate de sodium | : | 0,80 | 0,5 |
| - Phosphate monocalcique | : | 0,84 | 1 |
| - Sucre vanillé | : | 0,25 | 1 |
| - Oeufs entiers congelés | : | 9,6 | 0,25 |
| - Colorant végétal tajete | : | 0,20 | 1 |
| - Eau | : | 14,00 | 0 |
| - Bicarbonate d'ammonium | : | 0,54 | 0 |
|  |  | 250,53 | |

La pâte ainsi obtenue est alors co-extrudée avec un fourrage obtenu à partir de la composition suivante, également en parties en poids.

EP 0 230 830 B1

|  |  |  | Coeff. MS |
|---|---|---|---|
| - Pâte de haricot | : | 116,40 | 0,82 |
| - Méliose 700 | : | 51,5 | 0,70 |
| - Lait écrémé en poudre | : | 14,65 | 0,97 |
| - Poudre de pomme Golden | : | 14,300 | 0,95 |
| - Gélatine 220 Bloom | : | 1,160 | 0,95 |
| - Pulpe d'orange 20 % | : | 10,300 | 0,20 |
| - Arôme vanille | : | 0,300 | 1 |
| - Bicarbonate d'ammonium | : | 0,33 | 0 |
| - Eau | : | 15,00 | 0 |
|  |  | 250,540 |  |

Dans cette recette, la gélatine et la poudre de pomme, ingrédients pulvérulents hygroscopiques, contribuent à l'obtention d'une viscosité satisfaisante pour un bon traitement en machine de la composition d'ensemble.

Après co-extrusion, découpe du boudin continue sortant de la filière, dorure de la face supérieure des pâtons à raison de 0,2 g d'oeuf par pâton d'environ 12,5 g de poids total, on obtient des biscuits ayant une humidité d'environ 11,5%.

EXEMPLE IV

On prépare, en procédant comme dans l'Exemple I, une pâte céréalière ayant la composition suivante en parties en poids.

|  |  |  | Coeff. MS |
|---|---|---|---|
| - Farine de froment | : | 100,00 | 0,85 |
| - Sucre | : | 75,00 | 1 |
| - Huile arachide Hydrogénée | : | 44,00 | 1 |
| - Dextrose | : | 3,80 | 0,95 |
| - Sel fin | : | 1,50 | 1 |
| - Bicarbonate d'ammonium | : | 0,54 | 0 |
| - Bicarbonate de sodium | : | 0,8 | 0,5 |
| - Phosphate monocalcique | : | 0,84 | 1 |
| - Sucre vanillé | : | 0,25 | 1 |
| - Oeufs entiers congelés | : | 9,6 | 0,25 |
| - Eau | : | 14,00 | 0 |
| - Petits raisins de Corynthe | : | 25,00 | 0,8 |
|  |  | 275,33 |  |

On prépare, par ailleurs, un mélange de fourrage ayant la composition suivante, en parties en poids.

7

| | | | Coeff. MS |
|---|---|---|---|
| - Pâte de haricot | : | 132,90 | 0,82 |
| - Purée de pomme | : | 11,80 | 0,174 |
| - Sirop de méliose | : | 59,00 | 0,70 |
| - Lait écrémé en poudre | : | 16,60 | 0,97 |
| - Poudre de pomme | : | 16,30 | 0,95 |
| - Gélatine 220 Bloom | : | 1,30 | 0,95 |
| - Bicarbonate d'ammonium | : | 0,32 | 0 |
| - Eau | : | 15,00 | 0 |
| - Raisins/Punch (égouttés) | : | 18,30 | 0,525 |
| - Sirop de Rhum | : | 3,80 | 0,49 |
| | | 275,32 | |

Un processus de fabrication tout à fait analogue à celui des Exemples précédents permet l'obtention de biscuits ou petits gâteaux aux raisins parfumés au rhum.

## EXEMPLE V

Pour l'obtention de gâteaux ou biscuits analogues à ceux de l'Exemple IV mais garnis de fragments de chocolat, on prépare d'abord une pâte céréalière ayant la composition suivante, en parties en poids :

| | | | Coeff. MS |
|---|---|---|---|
| - Farine de froment | : | 100,00 | 0,85 |
| - Sucre | : | 75,00 | 1 |
| - Huile arachide hydrogénée | : | 44,00 | 1 |
| - Dextrose | : | 3,80 | 0,95 |
| - Sel fin | : | 1,50 | 1 |
| - Bicarbonate d'ammonium | : | 0,54 | 0 |
| - Bicarbonate de sodium | : | 0,8 | 0,5 |
| - Phosphate monocalcique | : | 0,84 | 1 |
| - Sucre vanillé | : | 0,25 | 1 |
| - Oeufs entiers congelés | : | 9,6 | 0,25 |
| - Eau | : | 14,00 | 0 |
| - Fragments de chocolat | : | 25,00 | 1 |
| | | 275,33 | |

Cette pâte est ensuite co-extrudée avec un fourrage obtenu à partir des ingrédients suivants, en parties en poids :

8

|  |  | Coeff. MS |
|---|---|---|
| – Pâte de haricot | : 126,50 | 0,82 |
| – Purée de pomme | : 11,30 | 0,175 |
| – Méliose 700 | : 56,50 | 0,70 |
| – Lait écrémé en poudre | : 15,90 | 0,97 |
| – Poudre de pomme | : 15,50 | 0,95 |
| – Gélatine 220 Bloom | : 1,25 | 0,95 |
| – Bicarbonate d'ammonium | : 0,36 | 0 |
| – Eau | : 15,50 | 0 |
| – Fragments de chocolat | : 32,50 | 1 |
|  | 275,31 | |

Après dorure à l'oeuf et cuisson, comme décrit ci-dessus, on obtient des produits finis ayant une humidité de l'ordre de 11,5 % et dont les caractéristiques de structure, après obtention de l'état d'équilibre atteint en deux à trois semaines, se conservent pendant une longue ou très longue durée de stockage, au moins égale à six mois à compter de la date de fabrication.

**Revendications**

1. Produit alimentaire du type petit gâteau ou biscuit destiné à être conservé pendant une durée relativement longue après sa fabrication sans perdre ses qualités organoleptiques au cours de cette conservation, réalisé à partir d'au moins deux phases initialement distinctes dont la première, prévue pour former l'enveloppe extérieure du produit, est une composition céréalière riche en sucre cristallisant spontanément dans les conditions d'humidité et d'activité d'eau à l'équilibre du produit fini et dont la seconde est une composition contenant des ingrédients sucrants résistant à la cristallisation dans les conditions d'humidité et d'activité d'eau qui sont celles du produit fini, caractérisé en ce que ladite seconde composition contient en combinaison un élément non céréalier constitué par des fruits sous forme de noix choisis dans le groupe qui comprend les noix de coco, les noisettes et/ou des légumes sous forme de légumineuses, pris dans le groupe qui comprend les haricots, les fèves, les pois, ledit aliment non céréalier étant sous forme de poudre et ou de pâte et/ou de purée et constitue la source d'amidon et un élément de régulation de la viscosité et/ou de l'humidité, constitué par des fruits sous forme de poudre et/ou de pâte et/ou de purée et/ou de pulpe.

2. Produit alimentaire selon la revendication 1, caractérisé en ce que la seconde composition contient comme élément non céréalier de la poudre, pâte ou purée de légumineuse, notamment de haricot, et comme élément de régulation de la viscosité et/ou de l'humidité, de la poudre, pâte, purée ou pulpe de fruits prise dans le groupe qui comprend notamment les poudres de pommes et/ou de citron et/ou d'orange.

3. Produit alimentaire selon l'une quelconque des revendications précédentes, caractérisé en ce que la première compositions contient au moins 75 % de saccharose et/ou de lactose dans le mélange de sucres qu'elle renferme.

4. Produit alimentaire selon l'une quelconque des revendications précédentes, caractérisé en ce que ladite seconde composition contient en outre du bicarbonate d'ammonium.

5. Produit alimentaire selon l'une quelconque des revendications précédentes, caractérisé en ce qu'il présente une humidité comprise entre 11 et 12 % (rapport eau/produit fini en poids) et une activité d'eau de 0,63 à 0,67.

6. Produit alimentaire selon l'une quelconque des revendications précédentes, caractérisé en ce que ladite seconde composition comprend en tant qu'élément sucrant résistant à la cristallisation un sirop d'isoglucose à haute teneur en fructose.

7. Procédé de fabrication d'un produit alimentaire du type petit gâteau ou biscuit destiné à être conservé pendant une durée relativement longue après sa fabrication sans perdre ses qualités organoleptiques au cours de cette conservation et qui est réalisé à partir d'au moins deux phases initialement distinctes, lesdites deux phases étant co-extrudées au travers d'une filière d'une machine d'extrusion pour l'obtention d'un boudin continu, caractérisé en ce que ledit boudin, qui comprend une gaîne externe formée par une première composition céréalière riche en sucres cristallisant spontanément dans les conditions d'humidité et d'activité d'eau à l'équilibre du produit fini et un fourrage central formé par une seconde composition contenant des ingrédients sucrants résistants à la cristallisation dans les conditions d'humidité et d'activité d'eau qui sont celles du produit fini, est divisé en pâtons individuels, et en ce que lesdits pâtons sont ensuite soumis à une opération de cuisson, principalement par leur face supérieure, conduite entre 150 et 250°C, pendant une durée de 7 à 8 minutes et, le cas échéant après que lesdits pâtons aient été garnis sur leur face supérieure d'un apprêt ou enduit de dorure.

8. Procédé selon la revendication 7, caractérisé en ce que dans le cas d'une source d'amidon à base de légumes, on effectue d'abord une pré-cuisson dans l'eau bouillante des fèves, des pois des fèves de haricots et en ce que l'on broie ensuite lesdites fèves pré-cuites dans l'eau bouillante sur des cylindres de granit en présence de sucre cristallisé.

## Claims

1. Foodstuff of the small cake or biscuit type intended to be preserved for a relatively long period after its manufacture without loss of its organoleptic properties in the course of this preservation, produced from at least two initially distinct phases of which the first, provided for forming the outer coating of the product, is a cereal composition rich in sugar crystallizing spontaneously under conditions of humidity and water activity at equilibrium of the finished product and of which the second is a composition containing sweetening ingredients resistant to crystallization under the conditions of humidity and of water activity which are those of the finished product, characterized in that said second composition contains in combination a non-cereal element constituted by fruits in the form of nuts selected from the group which comprises coconut, hazelnuts and/or vegetables in the form of leguminosae, taken from the group which comprises beans, broad beans, peas, said non-cereal foodstuff being in the form of powder and/or paste and/or mash and constitutes the source of starch and a regulating element for the viscosity and/or the humidity, constituted by fruits in the form of powder and/or of paste and/or of mash and/or of pulp.

2. Foodstuff according to claim 1, characterized in that the second composition contains as non-cereal element powder, paste or mash of leguminosae, particularly bean, and as regulating element for the viscosity and/or the humidity, powder, paste, mash or pulp of fruits taken from the group which comprises particularly powder of apples and/or of lemon and/or of orange.

3. Foodstuff according to any one of the preceding claims, characterized in that the first composition contains at least 75% of saccharose and/or of lactose in the mixture of sugars that it contains.

4. Foodstuff according to any one of the preceding claims, characterized in that said second composition contains in addition ammonium bicarbonate.

5. Foodstuff according to any one of the preceding claims, characterized in that it has a humidity comprised between 11 and 12% (ratio water/finished product by weight) and a water activity of 0.63 to 0.67.

6. Foodstuff according to any one of the preceding claims, characterized in that said second composition comprises as sweetening element resisting crystallization an isoglucose syrup with a high fructose content.

7. Method of manufacturing a foodstuff of the small cake or biscuit type intended to be preserved for a relatively long period after its manufacture without loss of its organoleptic properties in the course of this preservation and which is produced from at least two initially distinct phases, said two phases being coextruded through a die of an extrusion machine to obtain a continuous roll, characterized in that said roll, which comprises an outer sheath formed by a first cereal composition rich in sugar crystallizing spontaneously under the conditions of humidity and of water activity at equilibrium of the finished product and a central filling formed by a second composition containing sweetening ingredients resistant to crystallization under the conditions of humidity and of water activity which are those of the finished product, is divided into individual units, and in that said units are then subjected to a cooking operation, principally through their upper surface, conducted between 150 and 250° C, for a period of the order of 7 to 8 minutes and, if necessary after said units have been covered on their upper surface with a dressing or coating of glazing.

8. Method according to claim 7, characterized that in the case of a starch source based on vegetables, a precooking is first carried out in boiling water of the broad beans, of the peas, of the beans, and wherein said precooked broad beans are then ground in boiling water on granite rolls in the presence of crystalline sugar.

**Ansprüche**

1. Lebensmittel vom Typ kleines Backwerk oder Keks, das während einer relativ langen Zeitspanne nach der Herstellung aufbewahrt werden kann, ohne im Verlauf dieser Zeit seine organoleptischen Eigenschaften zu verlieren, hergestellt ausgehend von mindestens zwei ursprünglich verschiedenen Phasen oder Massen, von denen die erste, vorgesehen für die Umhüllung des Produktes, eine Masse auf der Basis von Getreide und reich an Zucker ist, der spontan unter den Bedingungen der Feuchtigkeit und der Wasseraktivität im Gleichgewichtszustand des Endproduktes kristallisiert, und dessen zweite eine Masse ist, die süßende Bestandteile enthält, die unter den Bedingungen der Feuchtigkeit und der Wasseraktivität des Endproduktes nicht kristallisieren, dadurch **gekennzeichnet, daß** die zweite Masse in Kombination miteinander enthält: ein Nicht-Getreide-Produkt, bestehend aus Früchten in Form von Nüssen, ausgewählt aus der Gruppe, die Kokosnüsse, Haselnüsse oder Analoge umfaßt, und/oder Gemüse in Form von Leguminosen aus der Gruppe, die grüne Bohnen, Bohnen, Erbsen oder Analoge umfaßt, wobei dieses Nicht-Getreide-Lebensmittel als Pulver und/oder Paste und/oder Brei vorliegt und die Stärkequelle darstellt, und einen Bestandteil zum Regulieren der Viskosität und/oder der Feuchtigkeit, bestehend aus Früchten in Form von Pulver und/oder Paste und/oder Brei und/oder Fruchtfleisch.

2. Lebensmittel nach Anspruch 1, dadurch **gekennzeichnet, daß** die zweite Masse als Nicht-Getreide-Produkt Pulver, Brei oder Paste von Leguminosen, vor allem von grünen Bohnen, und als Mittel zur Regulierung der Viskosität und/oder der Feuchtigkeit Pulver, Paste, Brei oder Fleisch von Früchten aus der Gruppe, die vor allem die Pulver von Äpfeln und/oder Zitronen und/oder Orangen umfaßt, enthält.

3. Lebensmittel nach einem der vorangehenden Ansprüche, dadurch **gekennzeichnet, daß** die erste Masse mindestens 75% Saccharose und/oder Lactose in dem Zuckergemisch, das sie umfaßt, enthält.

4. Lebensmittel nach einem der vorangehenden Ansprüche, dadurch **gekennzeichnet, daß** die zweite Masse zusätzlich Ammoniumbicarbonat enthält.

5. Lebensmittel nach einem der vorangehenden Ansprüche, dadurch **gekennzeichnet, daß** es eine Feuchtigkeit von 11 bis 12% (Gewichtsverhältnis von Wasser zu Endprodukt) und eine Wasseraktivität von 0,63 bis 0,67 aufweist.

6. Lebensmittel nach einem der vorangehenden Ansprüche, dadurch **gekennzeichnet, daß** die zweite Masse als süßenden, nicht kristallisierenden Bestandteil einen Isoglucosesirup mit hohem Fructosegehalt umfaßt.

7. Verfahren zur Herstellung eines Lebensmittels vom Typ kleines Backwerk oder Keks, das während einer relativ langen Zeitspanne nach seiner Herstellung aufbewahrt werden kann, ohne im Verlauf dieser Zeit seine organoleptischen Eigenschaften zu verlieren, und das ausgehend von mindestens zwei ursprünglich verschiedenen Phasen oder Massen hergestellt wird, wobei die beiden Phasen oder Massen durch eine Düse einer Extrudiermaschine coextrudiert werden, um einen kontinuierlichen Strangpreßling zu erhalten, dadurch **gekennzeichnet,** daß der Strangpreßling eine Außenhülle umfaßt, gebildet aus einer ersten Masse auf Getreidebasis, reich an Zucker, die spontan unter den Bedingungen der Feuchtigkeit und der Wasseraktivität im Gleichgewichtszustand des Endproduktes kristallisieren sowie eine zentrale Fülle, gebildet aus einer zweiten Masse, die die süßenden Bestandteile enthält, die unter den Bedingungen der Feuchtigkeit und Wasseraktivität des Endproduktes nicht kristallisieren, daß man den Strangpreßling in einzelne Teighaufen unterteilt und diese Teighaufen abbackt, vor allem an ihrer Oberfläche, bei 150 bis 250°C während einer Zeitspanne von 7 bis 8 Minuten und gegebenenfalls nachdem diese Teighaufen an ihrer Oberfläche einen Glanz verleihenden Auftrag oder Überzug erhalten haben.

8. Verfahren nach Anspruch 7, dadurch **gekennzeichnet,** daß man im Falle einer Stärkequelle auf der Basis von Gemüsen die Bohnen, Erbsen oder analogen Produkte, wie grüne Bohnen, vorkocht, und dann die im kochenden Wasser vorgekochten Bohnen auf Walzen aus Granit in Gegenwart von kristallisiertem Zucker vermahlt.